# EUROPÄISCHE PATENTSCHRIFT

(11) **EP 2 641 060 B1**
(45) Veröffentlichungstag und Bekanntmachung des Hinweises auf die Patenterteilung: **24.02.2016**
(21) Anmeldenummer: 11785344.0
(22) Anmeldetag: 16.11.2011
(51) Int. Cl.: G01C 21/36, G01C 21/34

(54) **REICHWEITEN- UND/ODER VERBRAUCHSBERECHNUNG MIT FLÄCHENSEGMENTEN ZUGEORDNETEN ENERGIEKOSTEN**
RANGE- AND/OR CONSUMPTION CALCULATION WITH ENERGY COSTS ASSOCIATED WITH AREA SEGMENTS
CALCUL D'AUTONOMIE ET/OU DE CONSOMMATION AU MOYEN DE COÛTS ÉNERGÉTIQUES AFFECTÉS À DES SEGMENTS DE SURFACE

(30) Priorität: 18.11.2010 DE 102010051546
(43) Veröffentlichungstag der Anmeldung: 25.09.2013
(73) Patentinhaber: Audi AG, 85045 Ingolstadt (DE)
(72) Erfinder: LANGE, Rainer, 85049 Ingolstadt (DE)
(74) Vertreter: Brandt, Kai
(86) Internationale Anmeldenummer: PCT/EP2011/005769
(87) Internationale Veröffentlichungsnummer: WO 2012/065726

(56) Entgegenhaltungen:
- EP-A1- 1 505 370
- EP-A1- 2 172 740
- DE-A1-102008 037 262
- US-A- 5 539 399
- US-A1- 2006 004 515

## Beschreibung

Die Erfindung betrifft eine Reichweiten- und/oder Verbrauchsberechnung für ein Fahrzeug.

Um die Restreichweite eines Fahrzeugs bei einem gegebenen Wert seines Energiespeichers als Fläche grafisch darzustellen, ist eine Berechnung einer Vielzahl von möglichen Routen notwendig. Diese Berechnungen belasten die Rechenkapazität sehr stark, sofern sie mit den heute üblichen klassischen Verfahren durchgeführt werden.

EP 2 172 740 und US 5 539 399 offenbaren jeweils Verfahren zum Ermitteln einer Reichweite basierend auf topographischen Eigenschaften von gespeicherten staßensegmenten.

EP 1 505 370 beschreibt eine Routenberechnung unter Verwendung von kacheln.

DE 10 2007 059 120 A1 offenbart ein Verfahren zur Bestimmung einer Route von einem Start- zu einem Zielpunkt, wobei eine hinsichtlich des Energieverbrauchs optimierte Route bestimmt wird, wozu zumindest einem Teil der Elemente der ein Verkehrswegenetz abbildenden Kartendaten, auf deren Grundlage die Bestimmung der Route erfolgt, Energieverbrauchswerte zugeordnet werden, die einen beschleunigungsabhängigen Anteil aufweisen.

DE 10 2007 037 329 A1 beschreibt ein Verfahren zur Bestimmung einer optimalen Fahrstrategie eines Kraftfahrzeugs für eine Fahrt von einem Startzu einem Zielpunkt. Dabei umfasst die Bestimmung der optimalen Fahrstrategie die Ermittlung einer Route von einem Startpunkt zu einem Zielpunkt. Die Fahrstrategie wird in Abhängigkeit von mindestens zwei Parametern optimiert, welche aus folgender Gruppe ausgewählt sind: Attraktivität der Route, Fahrtdauer, Komfort, Betriebskosten und Sicherheit. Zusätzlich wird eine Kraftfahrzeuganzeige beschrieben, welche kombiniert eine Abweichung von einem bestimmten Optimum eines Betriebszustandes, insbesondere eines Energieverbrauchs-Betriebszustandes, des Kraftfahrzeugs und eine Maßnahme zur Verbesserung des Betriebszustandes darstellt.

DE 103 02 504 A1 betrifft ein Verfahren zum Ermitteln der Reichweite eines Elektrofahrzeugs, bei dem Fahrzeug-, Fahrstrecken- und/oder umweltbezogene Informationen über das Fahrzeug und eine geplante oder eine aktuell zu befahrende Fahrstrecke von einem Fahrzeugcomputer mittels geeigneter Informationserfassungsgeräte erfasst und verarbeitet werden. Dazu werden diese Informationen vor Beginn und/oder beim Befahren einer Fahrstrecke miteinander verknüpft und hinsichtlich einer vorgegebenen oder sich variabel ändernden Fahrzeugbetriebsweise bewertet. Anschließend wird aus diesen Informationen und/oder dem Bewertungsergebnis die verbleibende Reichweite des Elektrofahrzeugs errechnet und in einer Anzeigevorrichtung zur Anzeige gebracht.

Davon ausgehend ergibt sich die Aufgabe, eine Reichweiten- und/oder Verbrauchsberechnung für ein Fahrzeug zur Verfügung zu stellen, die sich bei hinreichender Genauigkeit durch große Effizienz auszeichnet.

Diese Aufgabe wird durch die in den unabhängigen Patentansprüchen angegebenen Erfindungen gelöst. Vorteilhafte Ausgestaltungen ergeben sich aus den abhängigen Ansprüchen.

Der Erfindung liegt die Überlegung zugrunde, dass die Restreichweite vor allem von den Einflussgrößen Fahrverhalten und Straßenverhältnisse abhängt. Der letztere Punkt eignet sich für eine Vorausberechnung im gesamten Kartengebiet. Die Abspeicherung von speziellen Informationen, die die Energiekosten bzw. Energieaufwände zur Bewältigung einer Strecke beschreiben, als Anteil von Navigationsdaten erlaubt eine effiziente und schnelle Berechnung der Restreichweite.

Dementsprechend werden bei einem Verfahren zur Reichweiten- und/oder Verbrauchsberechnung für ein Fahrzeug Flächensegmenten zugeordnete Energiekosten verwendet. Im Gegensatz zu üblichen Navigationsdatenbanken und den damit verbundenen Berechnungsverfahren, bei denen Entfernungskosten und/oder Zeitkosten streckenbezogen sind, sind die Energiekosten im vorliegenden Verfahren also flächenbezogen.

Die Energiekosten sind vorzugsweise Energiekosten, die zum Durchfahren des Flächensegments, dem sie jeweils zugeordnet sind, mit dem Fahrzeug notwendig sind.

Je nach Ausbildung des Berechnungsverfahrens sind die Energiekosten bevorzugt abhängig oder unabhängig von der Richtung des Durchfahrens des Flächensegmentes.

Vorzugsweise sind die Energiekosten anhand von Straßen zugeordneten Kosten ermittelt worden, wobei die Straßen durch die Flächensegmente verlaufen. Weiter bevorzugt sind dazu Schnittpunkte von Straßen mit Kanten des Flächensegments, durch das sie verlaufen, ermittelt. Man berechnet dann, beispielsweise mit einem Dijkstra-Algorithmus, die Kosten, um von einem Schnittpunkt zu anderen Schnittpunkten zu gelangen. Die Energiekosten sind dann aus diesen Kosten ermittelt, etwa durch Durchschnittsbildung, die auch richtungsabhängig vorgenommen werden kann.

Die den Straßen zugeordneten Kosten gehen insbesondere aus Messdaten und/oder Berechnungen und/oder Simulationen in physikalischen Modellen hervor.

Das Verfahren wird insbesondere in einer Recheneinrichtung eines Kraftfahrzeugs durchgeführt und die Ergebnisse zur Ansteuerung einer Anzeigevorrichtung oder dergleichen weiterverwendet.

Die Flächensegmente sind vorzugsweise rechteckig, insbesondere von Form von Kacheln oder Parzellen.

Weiter bevorzugt wird bei der Berechnung ein Verfahren analog zum Dijkstra-Algorithmus verwendet. Dementsprechend wird die in einer Karte grafisch darzustellende Reichweite gewonnen, indem von einem ersten Flächensegment, in dem sich das Fahrzeug beispielsweise aktuell aufhält, zu einem zweiten Flächensegment expandiert wird, das an das erste Flächensegment angrenzt und dem von allen an das erste Flächensegment angrenzenden Flächensegmenten die geringsten Energiekosten zugeordnet sind. Bei von der Richtung des Durchfahrens abhängigen Energiekosten wird hierbei bevorzugt die Richtung berücksichtigt, die sich aus der Lage des ersten Flächensegmentes zum zweiten Flächensegment ergibt.

Im nächsten Schritt wird vom ersten und zweiten Flächensegment zu einem dritten Flächensegment expandiert, das an das erste Flächensegment angrenzt und dem von allen an das erste Flächensegment angrenzenden Flächensegmenten die nach dem zweiten Flächensegment geringsten Energiekosten zugeordnet sind oder das an das zweite Flächensegment angrenzt, wenn dem ersten, zweiten und dritten Flächensegment in Summe geringere Energiekosten zugeordnet sind als dem ersten Flächensegment und dem Flächensegment in Summe zugeordnet sind, dem von allen an das erste Flächensegment angrenzenden Flächensegmenten die nach dem zweiten Flächensegment geringsten Energiekosten zugeordnet sind.

Dieses Verfahren wird iterativ für die nächsten Flächensegmente fortgesetzt.

Alternativ oder ergänzend können die Flächensegmente zur Reichweiten- und/oder Verbrauchsberechnung sternförmig und/oder rekursiv expandiert werden.

Bevorzug wird die Reichweiten- und/oder Verbrauchsberechnung auf einem Expansionsweg abgebrochen, wenn die Summe der Energiekosten der Flächensegmente eine vorgegebene Energiemenge erreicht oder übersteigt.

Weiter bevorzugt wird die Reichweiten- und/oder Verbrauchsberechnung insgesamt abgebrochen, wenn die Summe der Energiekosten der Flächensegmente auf einer Vielzahl von Expansionswegen, insbesondere jedem Expansionsweg, eine vorgegebene Energiemenge erreicht oder übersteigt.

Für eine angenehme grafische Darstellung in der Anzeige des Fahrzeugs werden vorzugsweise die Kanten der sich aus den Flächensegmenten, auf die expandiert wurde, ergebenden Gesamtfläche geglättet.

Eine Vorrichtung, insbesondere ein Navigationssystem, ist eingerichtet ein Verfahren der oben beschriebenen Art auszuführen. Dazu ist die Vorrichtung vorzugsweise eine Vorrichtung zum Berechnen von Gesamtenergiewerten mit einem Eingang und/oder Speicher zum Empfangen und/oder zum Speichern von Flächensegmenten zugeordneten Energiekosten und einem Prozessor zum Addieren der Flächensegmenten zugeordneten Energiekosten.

Ein Verfahren der oben beschriebenen Art kann durch ein Programmprodukt ausführbar sein, wenn es auf einem Rechner abläuft. Ein Speicher, insbesondere eine Datenbank, eine SD-Karte, eine DVD oder eine Festplatte weist Flächensegmenten zugeordnete Energiewerte auf.

Weitere Vorteile und Eigenschaften ergeben sich aus der Beschreibung von Ausführungsbeispielen anhand der Zeichnung. Dabei zeigt:
- Figur 1: eine Übersicht über ein Verfahren zur Reichweiten- und/oder Verbrauchsberechnung und eine daraus resultierende Anzeige;
- Figur 2: einen ersten Schritt einer Kachelexpansion analog zum Dijkstra-Algorithmus;
- Figur 3: einen zweiten Schritt einer Kachelexpansion analog zum Dijkstra-Algorithmus;
- Figur 4: eine Glättung eines Berechnungsergebnisses;
- Figur 5: eine rekursive Kachelexpansion;
- Figur 6: das Ermitteln von Schnittpunkten von Straßen oder Strecken mit Kanten eines Flächensegments in Form einer Kachel;
- Figur 7: das Ermitteln von Routen zwischen den Schnittpunkten;
- Figur 8: das Ermitteln von Energiekosten pro Durchfahrtrichtung und
- Figur 9: eine Illustration von Einfahrt- und Ausfahrtrichtungen für das Flächensegment in Form einer Kachel.

Digitale Karten sind typischerweise in Flächensegmente in Form von rechteckigen Kacheln zerlegt. Zur Erhöhung der Effizienz eines Verfahrens zur Reichweiten- und/oder Verbrauchsberechnung für ein Fahrzeug werden die Energiekosten pro Flächensegment vorberechnet und dem jeweiligen Flächensegment zugeordnet. Dies macht die eigentliche Reichweiten- und/oder Verbrauchsberechnung deutlich weniger berechnungsintensiv, da bei der Berechnung im Fahrzeug auf die vorberechneten und in einer Datenbank abgespeicherten Energiekosten für die jeweiligen Flächensegmente zurückgegriffen werden kann.

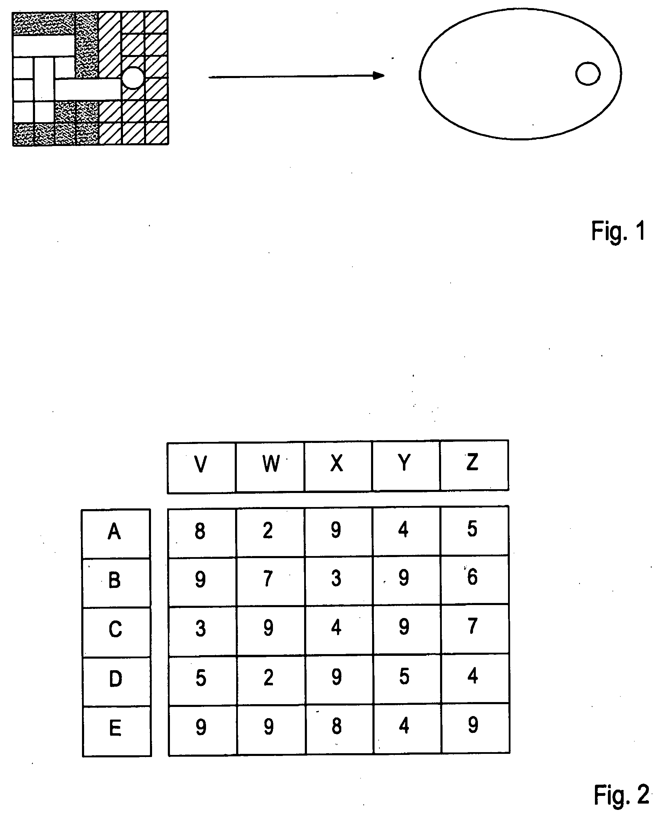

In Figur 1 erkennt man eine Vielzahl von Flächensegmenten in Form von Kacheln. Den Flächensegmenten sind dabei unterschiedliche Energiekosten zugeordnet, wobei den schraffierten Flächensegmenten die höchsten Energiekosten zugeordnet sind, den gepunkteten Flächensegmenten mittlere Energiekosten und den nicht markierten Flächensegmenten die niedrigsten Energiekosten. Die unterschiedlichen Energiekosten ergeben sich beispielsweise aus unterschiedlichen Straßenverhältnissen, die durch Steigungen, Geschwindigkeitsbegrenzungen und/oder regelmäßige Staus verursacht sein können. Die Flächensegmente sind rechteckig und weisen unterschiedliche Größen auf, um eine effiziente Berechnung langer Überlandetappen genauso zu ermöglichen, wie eine genaue Berechnung von Gebieten mit einer Vielzahl unterschiedlicher Straßen.

Gemäß der Energiekosten der in Figur 1 links dargestellten Flächensegmente resultiert die in Figur 1 rechts dargestellte Anzeige einer richtungsbezogenen Restreichweite.

In Figur 2 ist eine Vielzahl von Flächensegmenten AV bis EZ dargestellt. Den Flächensegmenten sind jeweils Energiekosten zugeordnet, die durch eine Zahl für das jeweilige Flächensegment ausgedrückt werden. Das Fahrzeug steht in der Mitte auf dem Flächensegment CX. Die durch eine Restenergie vorgegebenen Energiemenge beträgt 15. In einem ersten Expansionsschritt werden potenzielle Flächensegmente zur Expansion gefunden, die an das Flächensegment CX angrenzen. Dies sind die Flächensegmente BW, BX, BY, CW, CY, DW, DX und DY. Aus diesen dem Flächensegment CX benachbarten Flächensegmenten wird das Flächensegment mit der niedrigsten Energie gesucht, welches das Flächensegment DW ist, weil die Addition der zugordneten Energiekosten 4+2 das geringste Niveau ergibt.

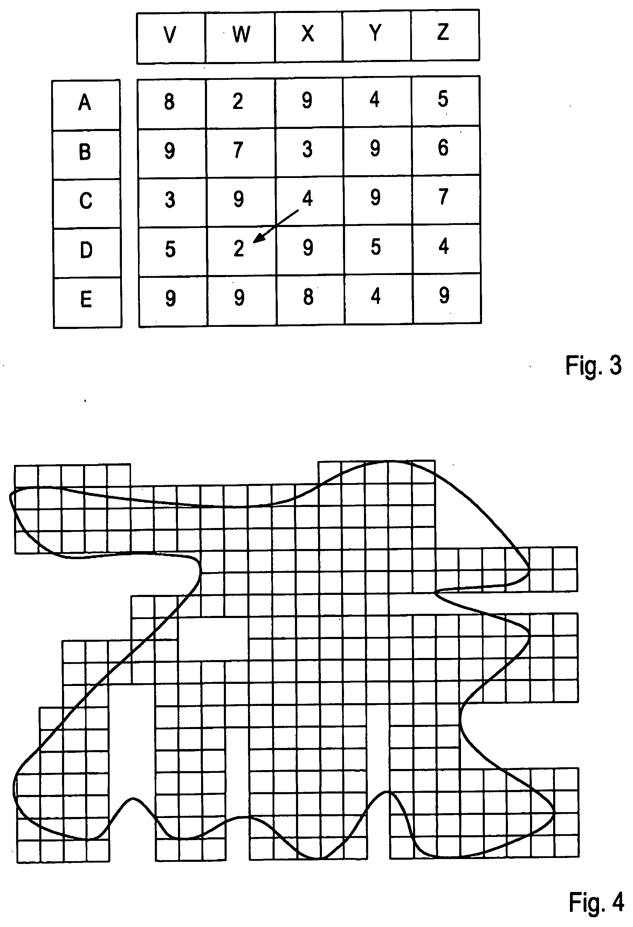

Im in Figur 3 dargestellten nächsten Schritt ergibt sich ein Expansionsbaum nun ohne das Flächensegment DW und zusätzlich mit den Flächensegmenten CV, DV, EV, EW und EX. Die Suche nach einem angrenzenden Flächensegment mit geringster kumulativer Energie führt auf das Flächensegment BX, weil die Summe der Energiekosten 4+3 das geringste Niveau aufweist.

Das Verfahren wird solange fortgesetzt, bis die durch das Energieniveau 15 vorgegebene Energie aufgebraucht ist.

Schließlich wird noch wie in Figur 4 dargestellt eine Glättungsfunktion in Form eines Splines oder einer ähnlichen Glättung zur optischen Verbesserung der Darstellung angewandt.

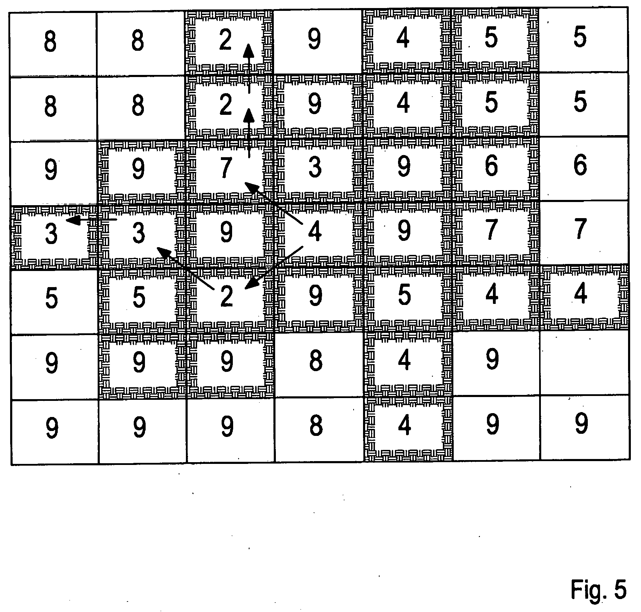

In Figur 5 ist ein rekursives Verfahren zur Expansion von Flächensegmenten dargestellt. Die Expansion wird dabei rekursiv bis zur Erreichung der durch das Energieniveau vorgegebenen Energiemenge gerechnet, die in Figur 5 den Wert 18 aufweist. Ausgehend von dem mittleren Flächensegment können dabei alle markierten Flächensegmente erreicht werden. Ein Glättungsverfahren kann auch hier zum Einsatz kommen. Es ist eine diagonale Expansion oder eine Einschränkung auf vertikale/horizontale Expansion möglich.

Zusammengefasst wird ein Straßennetz in Flächensegmente (Polygone, insbesondere Rechtecke) abstrahiert. Die Flächensegmente werden zu einem vereinfachtem Netz konvertiert und darauf beispielsweise Dijkstra-Algorithmen angewandt. Das Ergebnis hat seine Bedeutung für das Straßennetz, indem etwa Aussagen getroffen werden, wie weit man auf den Straßen fahren kann. Diese Aussagen beziehen sich dabei durch die Rücktransformation von den Flächensegmenten auf die Straßen auf ein Fahren auf den Straßen.

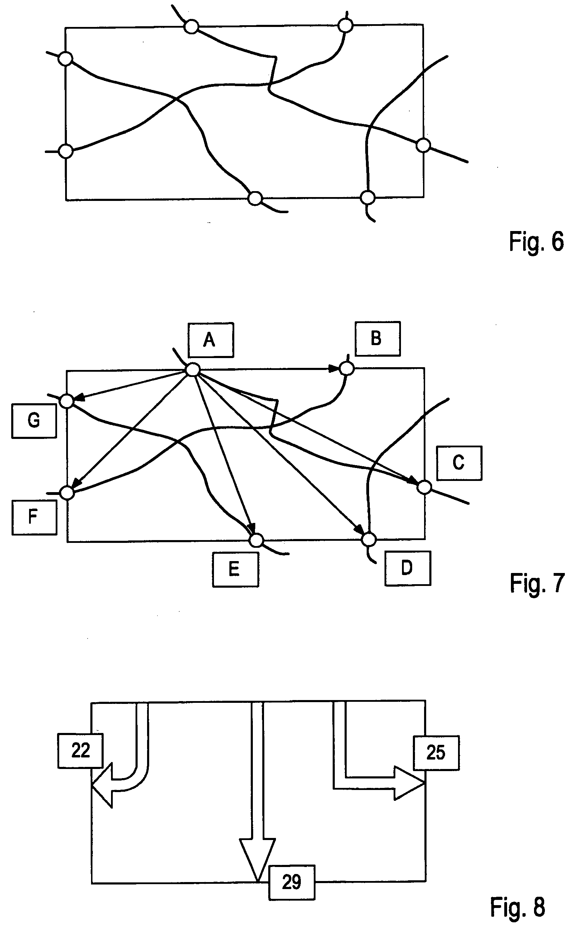

Mit Bezug auf die Figuren 6 bis 9 wird eine besonders bevorzugte Möglichkeit beschrieben, wie die Energiekosten pro Flächensegment ermittelt werden.

Dazu berechnet man alle Schnittpunkte von Straßen mit Grenzen (Kanten) des Flächensegments und berechnet dann beispielsweise mit klassischen Dijkstra-Methoden die Kosten, um von einem Schnittpunkt zu allen anderen zu gelangen. Dies führt man für jeden Schnittpunkt durch.

Figur 6 zeigt hierzu das Ermitteln von Schnittpunkten von Straßen oder Strecken mit den Kanten eines Flächensegments in Form einer Kachel mit der Form eines Rechtecks.

Figur 7 zeigt das Ermitteln von Routen zwischen den Schnittpunkten A bis G. Hierfür ergeben sich im gezeigten Beispiel die Kosten
A-B: Kosten 22
A-C: Kosten 25
A-D: Kosten 27
A-E: Kosten 25
A-F: Kosten 18
A-G: Kosten 17
B-C: Kosten 28
....
G-F: Kosten 12

In einem nächsten Schritt werden die Kosten pro Durchfahrtrichtung ermittelt. Dazu sind beim Vorliegen mehrerer Routen pro Durchfahrtrichtung unterschiedliche Ansätze möglich:
- Bilden eines Durchschnittswertes oder eines gewichteten Durchschnittswertes,
- Repräsentieren unterschiedlicher Werte durch eine Verteilung, insbesondere eine Gauß-Kurve,
- Auswahl anhand einer Route mit einem Minimum oder Maximum, beispielsweise den geringsten Kosten, der geringsten Entfernung, der geringsten Fahrzeit und/oder der geringsten Höhendifferenz.

In Figur 8 ist das Ermitteln von Energiekosten pro Durchfahrtrichtung über Durchschnittswerte dargestellt. So ergibt sich der Durchschnitt von Nord nach Ost (Routen A-B, A-C, B-C) zu 22 + 25 + 28 = 75/3 = 25.

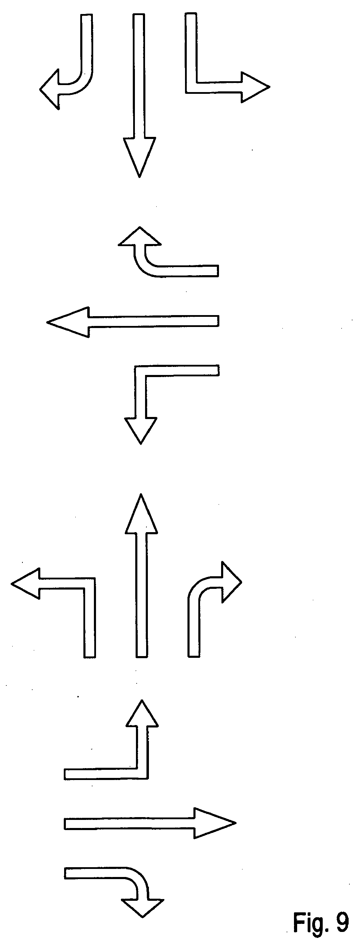

Gemäß Figur 9 wird die Berechnung für alle Richtungen wiederholt, also
- Kosten von Norden nach Osten, Süden, Westen,
- Kosten von Süden nach Osten, Westen, Norden,
- Kosten von Westen nach Norden, Süden, Osten und
- Kosten von Osten nach Süden, Westen, Norden.

Insgesamt ergeben sich 3 x 4 = 12 Kostenwerte der Energiekosten für alle Richtungen des Durchfahrens der Kachel. Diese Werte werden wie oben beschrieben als Abstraktion des Straßennetzes für die Expansion benutzt.

## Patentansprüche

1. Verfahren zur Reichweiten- und/oder Verbrauchsberechnung für ein Fahrzeug mittels einer Vorrichtung, bei dem Flächensegmenten (AV - EZ) in Form von rechteckigen Kacheln einer digitalen Karte zugeordnete Energiekosten, die von einem Eingang der Vorrichtung empfangen werden und/oder in einem Speicher gespeichert sind, verwendet werden, wobei die Flächensegmente (AV - EZ) unterschiedliche Größen aufweisen.

2. Verfahren nach Anspruch 1, bei dem die Energiekosten Energiekosten sind, die beim Durchfahren der Flächensegmente (AV - EZ) mit dem Fahrzeug entstehen.

3. Verfahren nach Anspruch 2, bei dem die Energiekosten abhängig von der Richtung des Durchfahrens sind.

4. Verfahren nach Anspruch 2, bei dem die Energiekosten unabhängig von der Richtung des Durchfahrens sind.

5. Verfahren nach einem der vorangehenden Ansprüche, bei dem die Energiekosten anhand von Straßen zugeordneten Kosten ermittelt sind.

6. Verfahren nach einem der vorhergehenden Ansprüche, bei dem zur Reichweiten- und/oder Verbrauchsberechnung von einem ersten Flächensegment (CX) zu einem zweiten Flächensegment (DW) expandiert wird, das an das erste Flächensegment (CX) angrenzt und dem von allen an das erste Flächensegment (CX) angrenzenden Flächensegmenten (BW, BX, BY, CW, CY, DW, DX, DY) die geringsten Energiekosten zugeordnet sind.

7. Verfahren nach Anspruch 6, bei dem vom ersten Flächensegment (CX) und zweiten Flächensegment (DW) zu einem dritten Flächensegment (BX) expandiert wird, das an das erste Flächensegment (CX) angrenzt und dem von allen an das erste Flächensegment (CX) angrenzenden Flächensegmenten (BW, BX, BY, CW, CY, DW, DX, DY) die nach dem zweiten Flächensegment (DW) geringsten Energiekosten zugeordnet sind, oder das an das zweite Flächensegment (DW) angrenzt, wenn dem ersten, zweiten und dritten Flächensegment in Summe geringere Energiekosten zugeordnet sind als dem ersten Flächensegment und dem Flächensegment in Summe zugeordnet sind, dem von allen an das erste Flächensegment angrenzenden Flächensegmenten die nach dem zweiten Flächensegment geringsten Energiekosten zugeordnet sind.

8. Verfahren nach einem der Ansprüche 1 bis 5, bei dem die Flächensegmente zur Reichweiten- und/oder Verbrauchsberechnung sternförmig und/oder rekursiv expandiert werden.

9. Verfahren nach einem der vorhergehenden Ansprüche, bei dem die Reichweiten- und/oder Verbrauchsberechnung auf einem Expansionsweg abgebrochen wird, wenn die Summe der Energiekosten der Flächensegmente, auf die expandiert wurde, eine vorgegebene Energiemenge erreicht oder übersteigt.

10. Verfahren nach einem der vorhergehenden Ansprüche, bei dem die Reichweiten- und/oder Verbrauchsberechnung abgebrochen wird, wenn die Summe der Energiekosten der Flächensegmente, auf die expandiert wurde, auf einer Vielzahl von Expansionswegen, insbesondere auf jedem Expansionsweg, eine vorgegebene Energiemenge erreicht oder übersteigt.

11. Verfahren nach Anspruch 10, bei dem die Kanten der sich aus den Flächensegmenten, auf die expandiert wurde, ergebenden Gesamtfläche geglättet werden.

12. Vorrichtung, insbesondere Navigationssystem, die eingerichtet ist, ein Verfahren nach einem der Ansprüche 1 bis 11 auszuführen.

13. Programmprodukt, durch das ein Verfahren nach einem der Ansprüche 1 bis 11 ausführbar ist, wenn es auf einem Rechner ausgeführt wird.

## Claims

1. Method of calculating range and/or consumption for a motor vehicle by means of a device in which energy costs, assigned to area segments (AV - EZ) in the form of rectangular tiles of a digital map, which are received by an input of the device and/or stored in a memory are used, wherein the area segments (AV - EZ) are of different sizes.

2. Method according to claim 1 in which the energy costs are energy costs incurred when driving through the area segments (AV - EZ) with the vehicle.

3. Method according to claim 2 in which the energy costs are dependent on the direction of driving through.

4. Method according to claim 2 in which the energy costs are independent of the direction of driving through.

5. Method according to any one of the preceding claims in which the energy costs are determined using costs assigned to roads.

6. Method according to any one of the preceding claims in which for range and/or consumption calculation expansion takes place from a first area segment (CX) to a second area segment (DW) which adjoins the first area segment (CX) and to which are assigned the lowest energy costs of all the area segments (BW, BX, BY, CW, CY, DW, DX, DY) adjoining the first area segment (CX).

7. Method according to claim 6 in which expansion takes place from the first area segment (CX) and second area segment (DW) to a third area segment (BX), which adjoins the first area segment (CX) and to which are assigned the lowest energy costs after the second area segment (DW) of all the area segments (BW, BX, BY, CW, CY, DW, DX, DY) adjoining the first area segment (CX), or which adjoins the second area segment (DW) if lower energy costs are assigned to the first, second and third area segments in total than are assigned in total to the first area segment and to the area segment to which of all the area segments adjoining the first segment the lowest energy costs after the second area segment are assigned.

8. Method according to any one of claims 1 to 5 in which the area segments for range and/or consumption calculation are expanded in a star-shaped or recursive manner.

9. Method according to any one of the preceding claims in which the range and/or consumption calculation is discontinued during expansion if the sum of the energy costs of the area segments on which expansion has taken place reaches or exceeds a predetermined quantity of energy,

10. Method according to any one of the preceding claims in which the range and/or consumption calculation is discontinued if the sum of the energy costs of the area segments on which expansion has taken place, on a plurality of expansion paths, more particularly every expansion path, reaches or exceeds a predetermined quantity of energy.

11. Method according to claim 10 in which the edges of the total area of the area segments to which expansion has taken place are smoothed.

12. Device, more particularly navigation system, set up to implement a method according to any one of claims 1 to 11.

13. Program product through which a method according to any one of claims 1 to 11 can be implemented if it is implemented on a computer.

## Revendications

1. Procédé de calcul d'autonomie et/ou de consommation pour un véhicule au moyen d'un dispositif, selon lequel on utilise des coûts énergétiques qui sont associés à des segments de surface (AV - EZ) sous forme de pavés rectangulaires d'une carte numérique et qui sont reçus à une entrée du dispositif et/ou mémorisés dans une mémoire, les segments de surface (AV - EZ) ayant des dimensions différentes.

2. Procédé selon la revendication 1, selon lequel les coûts énergétiques sont des coûts énergétiques qui sont engendrés lors de la traversée des segments de surface (AV - EZ) avec le véhicule.

3. Procédé selon la revendication 2, selon lequel les coûts énergétiques sont dépendants du sens de la traversée.

4. Procédé selon la revendication 2, selon lequel les coûts énergétiques sont indépendants du sens de la traversée.

5. Procédé selon l'une des revendications précédentes, selon lequel les coûts énergétiques sont déterminés à l'aide de coûts associés à des routes.

6. Procédé selon l'une des revendications précédentes, selon lequel, pour le calcul d'autonomie et/ou de consommation, on fait une extension d'un premier segment de surface (CX) à un deuxième segment de surface (DW) qui est adjacent au premier segment de surface (CX) et auquel sont associés les coûts énergétiques minimaux parmi tous les segments de surfaces (BW, BX, BY, CW, CY, DW, DX, DY) adjacents au premier segment de surface (CX).

7. Procédé selon la revendication 6, selon lequel on fait une extension du premier segment de surface (CX) et du deuxième segment de surface (DW) à un troisième segment de surface (BX) qui est adjacent au premier segment de surface (CX) et auquel sont associés les coûts énergétiques minimaux après le deuxième segment de surface (DW) parmi tous les segments de surfaces (BW, BX, BY, CW, CY, DW, DX, DY) adjacents au premier segment de surface (CX), ou qui est adjacent au deuxième segment de surface (DW) s'il est associé au total aux premier, deuxième et troisième segments de surface des coûts énergétiques inférieurs à ceux associés au total au premier segment de surface et au segment de surface auquel sont associés les coûts énergétiques minimaux après le deuxième segment de surface parmi tous les segments de surfaces adjacents au premier segment de surface.

8. Procédé selon l'une des revendications 1 à 5, selon lequel, pour le calcul d'autonomie et/ou de consommation, on parcourt les segments de surface en étoile et/ou de façon récursive.

9. Procédé selon l'une des revendications précédentes, selon lequel on interrompt le calcul d'autonomie et/ou de consommation sur un parcours d'extension lorsque la somme des coûts énergétiques des segments de surface sur lesquels on a fait une extension atteint ou dépasse une valeur d'énergie prédéterminée.

10. Procédé selon l'une des revendications précédentes, selon lequel on interrompt le calcul d'autonomie et/ou de consommation, lorsque la somme des coûts énergétiques de segments de surface sur lesquels on a fait une extension, sur plusieurs parcours d'extension, notamment sur chaque parcours d'extension, atteint ou dépasse une valeur d'énergie prédéterminée.

11. Procédé selon la revendication 10, selon lequel on, lisse les arêtes de la surface globale résultant des segments de surface sur lesquels on a fait une extension.

12. Dispositif, notamment système de navigation, qui est conçu pour mettre en oeuvre un procédé selon l'une des revendications 1 à 11.

13. Programme, par lequel peut être mis en oeuvre un procédé selon l'une des revendications 1 à 11, lorsqu'il est exécuté sur un ordinateur.
